# EUROPÄISCHE PATENTANMELDUNG

(11) **EP 2 098 722 A2**
(43) Veröffentlichungstag der Anmeldung: **09.09.2009**
(21) Anmeldenummer: 09002603.0
(22) Anmeldetag: 24.02.2009
(51) Int. Cl.: F03D 3/00

(54) **Windkraftanlage**

(30) Priorität: 03.03.2008 DE 102008012237
(71) Anmelder: Briese, Remmer, Dipl.-Ing., 26789 Leer (DE)
(72) Erfinder: Briese, Remmer, Dipl.-Ing., 26789 Leer (DE)
(74) Vertreter: Schmidt, Norbert

(57) **Zusammenfassung**

Die Erfindung betrifft eine Windkraftanlage mit wenigstens einem Helixrotor, wobei der oder die Helixrotoren auf einem Schiff derart angeordnet sind, dass ihre Drehachse parallel zur Schiffslängsachse verläuft. Jeder Helixrotor ist mit seiner Drehachse oder Welle an auf dem Schiffskörper angeordneten Masten gelagert. In mindestens einem Mast ist ein Aggregat zur Umwandlung von Rotationsenergie in eine andere Energieform angeordnet. Die von den Helixrotoren anzutreibenden Aggregate sind Generatoren, Pumpen, Verdichter, Zentrifugen, Getriebe zur Weiterleitung der Rotationsenergie zum Schiffspropeller. Die Rotoren können übereinander gelagert sein und eine Rotorsäule bilden, sie können aber auch hintereinander gelagert sein. Der Schiffsrumpf ist ein Schwerdeplacement-Rumpf.

## Beschreibung

Die Erfindung betrifft eine Windkraftanlage mit wenigstens einem Helixrotor.

Es ist bekannt, Windenergie mit Hilfe von Windkraftanlagen zu nutzen. Allen Windkraftanlagen ist gemeinsam, die kinetische Energie der bewegten Luftmasse in mechanische Rotationsenergie umzuwandeln. Ein Beispiel sind die Windparks bestehend aus Windrädern an Land. Auf hohen Masten sitzen Propeller bzw. Horizontalachsenmaschinen. Die Rotationsachse des Horizontalachsenrotors steht im Rotorbetrieb parallel zur Windrichtung und muss bei Windrichtungsänderung nachgeführt werden. Nachteilig an dieser Konstruktion ist somit, dass Horizontalachsenrotoren eine Windrichtungsnachführung benötigen, also in den Wind gedreht werden müssen, und je nach Windstärke erheblichen Lärm erzeugen.

Eine Lösung darauf stellen die Vertikalachsenrotoren dar, wie die Darrieus-Windturhine und die Verbesserung dieser Turbinen in Form des Helix-Rotors. Die Achsen dieser Rotoren sind lotrecht installiert. Die Lage der Rotationsachse des Helix-Rotors ist konstant. Helix-Rotoren verursachen aufgrund ihrer schraubenlinien- bzw. wendelförmigen Flügel kaum Schwingungen in der Lagerung und liefern ein konstantes Drehmoment und funktionieren windrichtungsunabhängig.

Helix-Rotoren werden seit einigen Jahren kommerziell zur Stromerzeugung benutzt, sie werden dazu auf Gebäuden installiert.

Um möglichst hohe Windstärken "ernten" zu können, wurden Windräder Off-Shore installiert, da auf dem Meer höhere und gleichmäßigere Windstärken vorkommen. Hierzu müssen die Windräder auf einem Turm montiert und mit einem Fundament in den Meeresgrund fixiert werden. Diese Art der Windenergienutzung ist bisher nur in küstennahen Flachwassergebieten möglich. Ab einer gewissen Meerestiefe war eine solche Konstruktion nicht mehr realisierbar.

In küstenfernen Meeresgebieten mit den weltweit größten Windstärken, den Tiefdruckzoncn des 40. bis 60. Breitengrades, konnte bislang nicht geerntet werden.

Im Modellbau wurden Horizontalachsenrotoren auf Bootskörper montiert und erfolgreich getestet. Im größeren Maßstab, im Yachtbau, ließ sich die Kombination von Horizontalachsenrotor und Schiffskörper nicht betreiben, da die durch den Seegang verursachten Rollbewegungen ("schaukeln") des Schiffskörpers Präzessionsmomente am Rotor verursachten, welche den Rotor oder dessen Lagerung zerstörten.

Ebenso schied ein auf einem Schiff mit lotrechter Drchachse installierter Helix-Rotor aus, da die Rotation um eine zur Schiffslängsachse lotrechte Achse ebenfalls starke Präzessionsmomentc verursacht, die für eine praktische Anwendung zu groß und daher nicht zu beherrschen sind.

Aufgabe der Erfindung ist es eine preiswerte Windkraftanlage mit Helixrotor zu schaffen, mit der auf dem Wasser Windenergie geerntet werden kann.

Aufgabe des erfindungsgemäßen Verfahrens ist das Erzeugen von Rotationsenergie auf dem Wasser.

Die Aufgabe wird mit einer Windkraftanlage gemäß Anspruch 1 gelöst. Vorteilhafte Ausgestaltungen und Weiterbildungen dieser Windkraftanlage sind Gegenstand der Ansprüche 2 bis 18.

Außerdem wird diese Aufgabe mit einem Verfahren gemäß Anspruch 19 gelöst. Vorteilhafte Ausgestaltungen und Weiterbildungen dieses Verfahrens sind Gegenstand der Ansprüche 20 bis 24.

Durch die erfindungsgemäße Anordnung des Rotors auf einem Schiff bleibt dieser auch bei einer Rollbewegung des Schiffskörpers ("schaukeln") mit seiner Achse parallel zur Schiffslängsachse. Die Rotationsachse des Rotors bleibt stabil, sie kippt nicht. Dies ist besonders wichtig, da das Rollen die bei weitem am stärksten ausgeprägte Bewegungsform eines Schiffsrumpfes insbesondere bei Seegang von der Seite ist. Es wird somit verhindert, dass das Rollen des Schiffskörpers ein Präzessionsmoment im Rotor verursacht.

Das Präzessionsmoment für einen auf einem Schiff installierten Rotor setzt sich zusammen aus:
- dem Störfaktor (Seegang)
- der Rotordrehzahl
- der Masse Es gilt somit: Mp = W_{Stör} x W_{Rotor} x J

Durch die erfindungsgemäße Positionierung der Rotorachse parallel zur Schiffsläagsachse und somit parallel zur Rollachse des Schiffes, kann ein Rotor auch bei stärksten Winden, entsprechendem Seegang und schwerem Rollen des Schiffskörpers bei hoher Drehzahl betrieben werden.

Ein durch Stampfen und Schlingern des Schiffskörpers erzeugtes Präzessionsmoment kann erfindungsgemäß dadurch minimiert werden, dass anstelle eines großen und schweren Rotors mehrere kleinere Rotoren in Reihe und /oder übereinander installiert werden.

Die erfindungsgemäße Windkraftanlage besitzt mehrere Einsatzbereiche: So kann aus Wind Energie auf Yachten, Frachtschiffen, Passagierschiffen, Fischereifahrzeugen und Spezialschiffen erzeugt werden, welche zur Nutzung als Haupt- und Hilfsenergie zum Antrieb dieser Schiffe oder zur Bordstromversorgung verwendet werden kann.
Darüber hinaus kann die erfindungsgemäße Ausführungsform mit modulartig über- und nebeneinander angeordneten Rotoren zur Ernte großer Mengen von Windenergie in windreichen Hochseegebieten eingesetzt werden.
Der Wind steht 24 Stunden am Tag zur Verfügung, wobei das erfindungsgemäße Schiff als mobile "Ernteeinheit" den Wind auch folgen kann. Die mechanische Leistung des Windes steigt in der dritten Potenz der Windgeschwindigkeit, während die vom Rotor verursachte Kraft, der Rotorschub, nur quadratisch mit der Windgeschwindigkeit zunimmt, somit steigt die Wirtschaftlichkeit des erfindungsgemäßen Rotorschiffs mit zunehmender Windgeschwindigkeit stark an.

Die erfindungsgemäße Ausführungsform mit modulartig über- und nebeneinander angeordneten Rotoren kann, bedingt durch die erfindungsgemäße ellipsenartige Profilierung und Anordnung der Masten, bei einem Kurs von mehr als 90 Grad zum Wind Vortrieb erzeugen und somit zugleich Wind ernten als auch durch Windantrieb fahren, und zwar rechtwinklig zu den Isobaren von Tiefdruckgebieten. Mit dieser Eigenschaft ist es möglich, während der Windernte in ein Tiefdruckgebiet hineinzufahren, sich von seinem Zentrum zu entfernen oder ihm auf seiner Zugbahn zu folgen. Hierdurch wird die emtbare Windleistung gegenüber einer ortsfesten Windkraftanlage im gleichen Gebiet signifikant erhöht. Es wird eine ökonomische hochseetaugliche Windkraftanlage geschaffen.

Die Konstruktion des Schiffes ist preiswert, da erfindungsgemäß der Rumpf des Schiffes aus Stahlbeton besteht. Außerdem erfüllt ein solcher Schiffsrumpf die Anforderung an hohes Gewicht, um die Beschleunigungen des Schiffskörpers im Seegang möglichst klein zu halten und der Anordnung der Masten und Rotoren ein möglichst großes aufrichtendes Moment entgegenzubringen.

Bedingt durch den Rotorschub nimmt bei zunehmender Windstärke die Krängung des Schiffskörpers zu, so dass die dem Wind exponierte Rotorfläche verkleinert wird. Durch diese mit Segelschiffen vergleichbare Eigenschaft können die Rotoren nicht überlastet werden und eine aufwändige Leistungsregelung entfällt.

Für die Steuer- und Manövrierfähigkeit ist ein einfacher Hilfsantrieb ausreichend. Aufgrund der hohen Automatisierbarkeit der technischen Anlagen und dem fast ausschließlichen Einsatz auf hoher See ist zum Betrieb nur eine geringe Besatzungsstärke nötig.

Weitere Vorteile der erfindungsgemüßen Windkraftanlage sind:
- die erzeugbare Energiemenge ist unbegrenzt
- für jeden zugängliche internationale Seegebiete (und damit garantiert korruptionsfreie Konkurrenzsituation und langfristig stabile Energiepreise),
- unbegrenzte Energiemenge
- keine Beeinflussung von Zivilisationen
- die Belastung von Ökosystemen ist vernachlässigbar

Die nach dem erfindungsgemäßen Verfahren erzeugte Rotationsenergie kann direkt in Aggregate eingespeist und in andere Energieformen umgewandelt werden, vorzugsweise in elektrische Energie, aber auch in mechanische Energie, z. B. für den Schiffsantrieb oder zum Betrieb von Pumpen zur Meerwasserentsalzung durch Umkehrosmose. Die elektrische Energie kann in speicherbare chemische Verbindungen umgewandelt werden.

Mit dem erfindungsgemäßen Verfahren ist es möglich, Produkte herzustellen, die durch Elektrolyse erzeugt werden, vorzugsweise Wasserstoff, aber auch Aluminium, Kupfer und andere Metalle bzw. chemische Verbindungen.

Mit dem erfindungsgemäßen Verfahren ist es möglich, mit der aus der Rotationsenergie gewonnenen elektrischen Energie, katalytisch synthetisiertes Methanol herzustellen, um die geerntete Windenergie möglichst effizient, kostengünstig und gefährdungsarm speichern und als universell einsetzbaren Kraftstoff und Chemicrohstoff transportieren zu können.

Es ergeben sich alle Vorteile, die eine Methanolherstellung mit sich bringt, nämlich:
- Aus Methanol können sämtliche Erdölprodukte synthetisiert werden;
- Methanol wird in großen Mengen zu Biodicselproduktion benötigt;
- Die CO²- und Methanol-Handhabung ist ungefährlich;
- Methanol-Brennstoffzellen sind ein Markt der Zukunft;
- Methanol hat eine höhere Oktanzahl als Benzin und ermöglicht sparsamere und saubere Otto- als auch Dieselmotoren;
- Methanol wird in großen Mengen zur MTBE-Herstellung benötigt;
- Brennendes Methanol kann mit Wasser gelöscht werden;
- Methanol ist mikrobiell abbaubar.

Gemäß einer bevorzugten Ausgestaltung der Erfindung ist jeder Helixrotor mit seiner Welle an auf dem Schiffskörper angeordneten Masten gelagert, wobei in mindestens einem Mast ein Aggregat zur Umwandlung von Rotationsenergie in eine andere Energieform bzw. in elektrische Energie angeordnet ist, wobei die von den Helixrotoren anzutreibenden Aggregate, Generatoren, Pumpen, Verdichter, Zentrifugen, Getriebe zur Weiterleitung der Rotationsenergie zum Schiffspropeller, sind. So ist sichergestellt, dass die von den Rotoren erzeugte mechanische Energie mit Hilfe der direkt an den Rotorenwellen angeordneten Aggregate in eine andere Energieform bzw. in elektrische Energie umgewandelt werden kann und vor Ort gezielt einsetzbar ist.

Nach einer bevorzugten Ausgestaltung der Erfindung ist der Durchmesser des Rotors geringer als die Breite des Schiffsrumpfes. So ist sichergestellt, dass beim Manövrieren und im Seegang der Rotor nicht beschädigt werden kann.

Gemäß einer bevorzugten Ausgestaltung der Erfindung sind mindestens zwei Rotoren übereinander gelagert und bilden eine Rotorsäule. So ist es möglich, bei gegebener Deckbreite möglichst viel Rotationsenergie zu erzeugen. Auch ist es bei dieser Konstruktion möglich, Platz an Deck zu sparen, wenn bestimmte Arbeiten an Deck durchgeführt, bzw. weitere Vorrichtungen installiert werden sollen.

Gemäß einer bevorzugten Ausgestaltung der Erfindung sind in einer Rotorsäule gegenläufig drehende Rotoren vorgesehen. Die aus Rotorpräzession auftretenden Lagerkräfte heben sich hierdurch in den Masten auf.

Gemäß einer bevorzugen Ausgestaltung der Erfindung sind mindestens zwei Rotoren hintereinander gelagert, wobei die hintereinander gelagerten Rotoren dieselbe Drehrichtung aufweisen. Bei dieser Konstruktion ist sichergestellt, dass die Präzessionsmomente, die auf den einzehien Rotor wirken können, gering sind. Grundsätzlich sind zwei kleine Rotoren von ihrem Massenträgheitsmoment und von dem auf sie wirkenden Präzessionsmoment günstiger als ein großer Rotor. Es gilt: Mehrere kleine Rotoren erzeugen in der Summe geringere Präzessionsmomente als ein großer Rotor gleicher Leistung. Zwei kleine Rotoren liefern die gleiche Leistung wie ein großer Rotor. So ist es möglich, dass bei gegebenem Rotordurchmesser die optimal Rotorlänge gewählt werden und dennoch die zur Verfügung stehende Deckslänge vollständig ausgenutzt werden kann. Die erforderliche Materialmenge zur Herstellung mehrerer kleiner Rotoren ist geringer als diejenige zur Herstellung eines großen Rotors gleicher Leistung. Weitere Vorteile ergeben sich aus Kostenersparnissen bei der industriellen Fertigung sowie höherer Redundanz im Betrieb.

Gemäß einer bevorzugten Ausgestaltung der Erfindung sind die Rotoren sowohl übereinander als auch nebeneinander angeordnet, wobei die Rotoren Rotorsäulen und Rotorreihen bilden. Modulartig können die einzelnen Bauteile oder Rotoren aufeinander und nebeneinander angeordnet werden. Durch die Modularität ist gewährleistet, dass Rotordurchmesser und Rotorlänge optimal aufeinander als auch auf die zur Verfügung stehende Decksfläche abgestimmt werden können. Die Schiffe suchen windreiche Regionen auf, so dass je nach gewünschter "Ernte" die Bestückung des Schiffsrumpfes mit Rotoren erfolgen kann. Die Höhe der Rotorsäule wird nur begrenzt durch das aufrichtende Moment des Schiffskörpers. Die Rotorachsen der einzelnen Rotoren verlaufen parallel zur Schiffslängsachse, so dass Roll- bzw. Schaukelbewegungen des Schiffes unschädlich sind. Sie wirken sich nicht auf die Stabilität der Rotoren aus.

Gemäß einer bevorzugten Ausgestaltung der Erfindung sind die Rotoren mit ihren Wellen auf vor und hinter ihnen im rechten Winkel zur Schiffslängsachse angeordneten Masten gelagert, wobei in jedem Mast mindestens ein Aggregat zur Umwandlung der Rotationsenergie in elektrische Energie angeordnet ist, wobei im ersten und im letzten Mast eine Rotorachse in den mittleren Masten zwei Rotorachsen lagern. Die Anordnung stellt sicher, dass die Rotoren platzsparend und mastsparend und dennoch sicher installiert sind. Jedem Rotor ist ein Aggre-gat zugeordnet, der direkt von der Rotorwelle angetrieben wird. So ist sichergestellt, dass die erzeugte mechanische Energie in verfügbare elektrische Energie umgewandelt werden kann.

Gemäß einer bevorzugten Ausgestaltung der Erfindung sind die Masten ellipsenartig profiliert. Die Masten können durch die ellipsenartige Profilierung bei einem Kurs von mehr als 90° zum Wind Vortrieb erzeugen. Damit ist das Rotorschiff in der Lage gleichzeitig durch Windantrieb zu fahren und zu ernten.

Gemäß einer bevorzugten Ausgestaltung der Erfindung ist der Abstand zwischen den Rotoren gering. So können möglichst viele Rotoren übereinander gelagert werden. Je geringer der Abstand der Rotoren untereinander ist desto höher ist der Wirkungsgrad der einzelnen Rotoren.

Gemäß einer bevorzugten Ausgestaltung der Erfindung ist der Schiffsrumpf ein Schwerdeplacement-Rumpf, wobei der Schiffskörper bzw. Rumpf aus Stahlbeton ist. Stahlbeton ist preiswert, korrosionsbeständig und eignet sich hervorragend zur industriellen Massenfertigung. Durch das hohe Gewicht des Stahlbetons kann sich der Schiffsrumpf auch im schweren Seegang behaupten und wird nicht so beschleunigt bzw. hin- und hergerissen, denn ein schwerer Rumpf ist im Seegang kleineren Beschleunigungen ausgesetzt als ein leichter Stahlrumpf. Das wiederum stellt sicher, dass die auf dem Schiffsrumpf installierten Rotoren möglichst wenig vom Schlingern und Stampfen des Schiffsrumpfes betroffen sind. Die Rollbewegung des Schiffes ist ohnehin unschädlich, denn diese wirkt sich aufgrund der Parallelität der Rotorachse mit der Schiffslängsachse nicht auf das Präzessionsmoment der Rotoren aus. Die Rotoren stehen somit stabil und können ihre Aufgabe nachgehen, nämlich Windenergie zu ernten und in Rotationsenergie zu überführen.

Gemäß einer bevorzugten Ausgestaltung der Erfindung sind auf dem Schi ff Druckspeicher angeordnet und Elektrolysatoren, die mit Aggregaten verbunden sind. So ist sichergestellt, dass die über die Aggregate gewonnene elektrische Energie auf dem Schiff individuell weiterverarbeitbar bzw. in andere Systeme einspeisbar ist.

Gemäß dem erfindungsgemäßen Verfahren wird Rotationsenergie mit einer Windkraftanlage auf einem Schiff erzeugt. Die Herstellung bzw. das Erzeugen der Rotationsenergie erfolgt durch die erfindungsgemäße Installation der Rotoren auf dem Schiffskörper. Die von den Rotoren durchgeführte Umwandlung der Strömungsenergie zu Rotationsenergie kann direkt zum Antrieb von Aggregaten verwendet werden. Die Nutzung der Rotationsenergie kann beliebig erfolgen, z. B. als elektrische Hilfsenergie für Handels-, Passagier-, Fischerei- und Spezialschiffe oder als Antriebsenergie für Yachten.
Auf einem Rotorschiff zum großmaßstäblichen Ernten von Windenergie kann die erzeugte Rotationsenergie zum Erzeugen von elektrischer Energie genutzt werden. Die elektrische Energie wiederum kann zum Erzeugen speicherbarer chemischer Verbindungen bzw. energiespeichernde chemische Verbindungen verwendet werden. Nur so ist die große Energieausbeute - aufgrund der Möglichkeit in den windreichen Seegcbieten zu ernten - auch sinnvoll konserviert bzw. speicherbar und damit lagerungsfähig.

Es ist auch möglich, mit dem erfindungsgemäßen Verfahren mit der aus der Rotationsenergie gewonnenen elektrischen Energie elektrolytisch H² zu erzeugen und unter Hinzufügung von CO² transportfähiges katalytisch synthetisiertes Methanol herzustellen. Es muß lediglich sichergestellt werden, dass das erzeugte Methanol auf dem Schiff lagerbar und gegegebenfalls von einem anderen Schiff abgeholt wird. Vorzugsweise wird dies durch ein weiteres spezielles Tankschiff erledigt. Das Schiff, welches das synthetisierte Methanol abholt, bringt vorzugsweise neues flüssiges CO² zur Befüllung der Druckspeicher auf dem Rotorschiff oder aber CO² als Trockeneis mit, welches dieses zur Durchführung der Methanolsynthese benötigt. Ist das Rotroschiff in Hafennähe, so kann das erzeugte Methanol sofort dort abgeladen und neues CO² zur weiteren Herstellung von Methanol eingelagert werden.
So ist es möglich, die auf offener See aus Wind gewonnene Energie zu speichern und sie der Zivilisation zur Verfügung zu stellen.

Anhand der Figuren 1 bis 7 werden Ausführungsbeispiele der Erfindung erläutert, und zwar zeigt:
- Figur 1:: eine Draufsicht auf einen Schiffskörper mit Helixrotor,

- Figur 2:: eine Seitenansicht eines Schiffskörpers mit Helixrotor,
- Figur 3:: einen Schnitt gemäß der Linie B-B von Figur 2,
- Figur 4:: eine Draufsicht auf einen Schiffskörper mit zwei hintereinander gelagerten Helixrotoren,
- Figur 5:: eine Draufsicht auf einen Schiffskörper mit zwei übereinander gelagerten Helixrotoren,
- Figur 6:: eine Seitenansicht eines Schiffskörpers mit modulartig angeordneten Helixrotoren,
- Figur 7:: eine Draufsicht auf einen Schiffskörper mit modulartig angeordneten Helixrotoren.

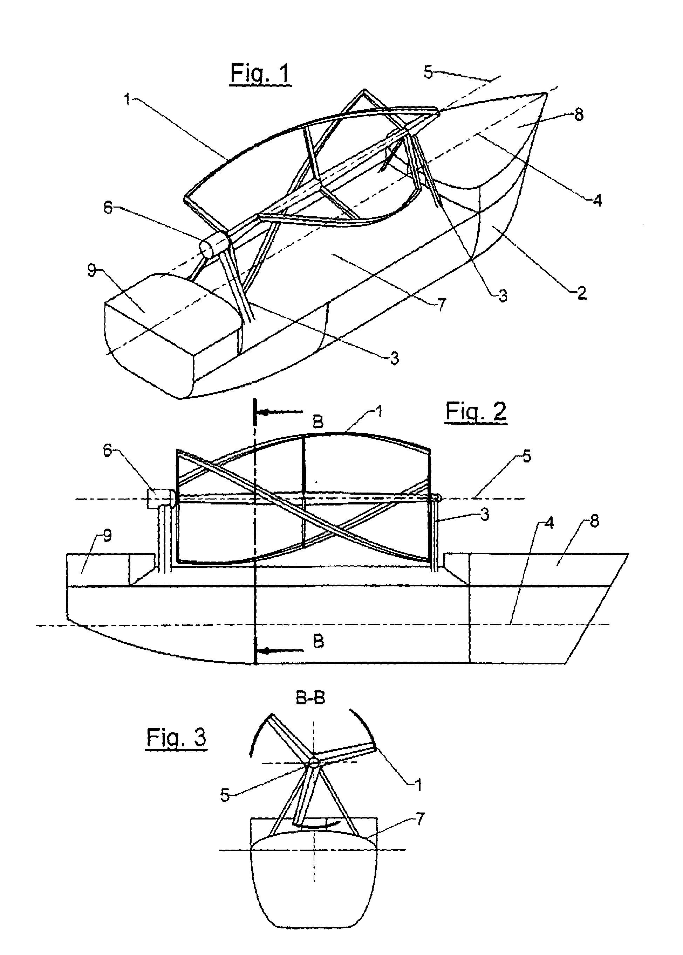

Auf einem Schiffskörper 2 ist zwischen Vorschiff 8 und Heck 9 ein Helix-Rotor 1 auf dem Schiffsdeck 7 angeordnet, siehe Figur 1 und 2. Rotor 1 ist liegend, d. h. er ist mit seiner Rotorachse bzw. Rotorwelle 5 parallel zur Schiffslängsachse 4 des Schiffskörpers 2 angeordnet. Rotor 1 ist mit geringem Abstand zum Schiffsdeck 7 angeordnet. Der Abstand des Rotors 1 zum Schiffsdeck 2 sollte möglichst klein sein. Da die Windenergie um so größer wird, je dichter der Rotor am Boden ist. Vorzugsweise ist der Abstand des Rotors 1 zum schiffsdeck 2 möglichst klein aber nicht zu klein zu halten, damit auf der einen Seite eine vollständige Ausnutzung der zur Verfügung stehenden Strömungsenergie gewährleistet ist, jedoch auf der anderen Seite eine Beschädigung des Rotors 1 durch Seegang vermieden werden kann. Der Durchmesser des Rotors 1 ist geringer als die Breite des Schiffskörpers 2, siehe Figur 3. Der Rotor 1 darf den Schiffskörper 2 seitlich nicht überragen. Dies führt zu Schwierigkeiten beim Manövrieren sowie Beschädigungen des Rotors 1 durch Seegang. Die Lagerung des Rotors 1 erfolgt gemäß der Lagerung von Wellen im allgemeinen. Jeder Helixrotor 1 ist mit seiner Welle 5 an bzw. auf einem offenen A-Mast 3 gelagert. In mindestens einem der Masten 3 ist ein Aggregat 6 angeordnet. Die Rotorwelle 5 treibt direkt das Aggregat 6 an. Aggregate 6 können seien: Generatoren, Pumpen, Kompressoren, Verdichter, Zentrifugen, Getriebe zur Weiterleitung der Rotationsenergie ins Schiffsinnere bzw. zum Schiffspropeller. Der Abstand von Mast 3 zum Heck des Schiffsrumpfes 9 sollte möglichst klein sein, aber so groß, dass eine Beschädigung des Rotors 1 durch Seegang nicht möglich ist. Der Abstand von Mast 3 zum Ende des Vorschiffes 8 sollte ebenfalls möglichst klein sein, aber dennoch so groß, dass eine Beschädigung des Rotors 1 möglichst ausgeschlossen werden kann.

Das Ausführungsbeispiel 1 ist besonders geeignet für die Erzeugung von Antriebsenergie für Yachten sowie Sport- und Versuchsschiffen als auch für die Erzeugung kleinerer Mengen von Hilfsenergie auf Fracht-, Passagier-, Fischerei- und Spezialschiffen.

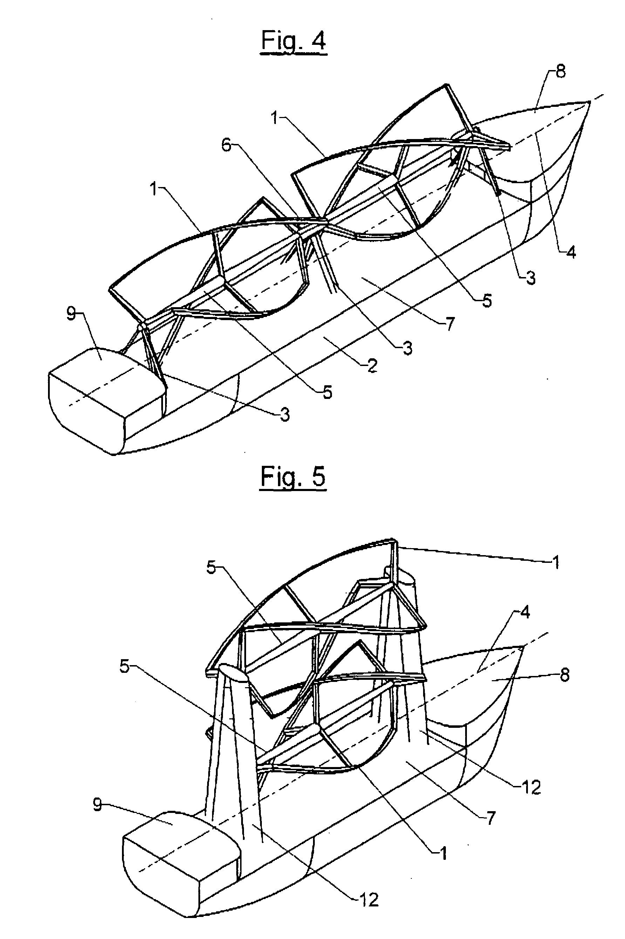

Gemäß einer weiteren Ausführungsform der Erfindung sind zwei gleich große Rotoren 1 hintereinander in Reihe zwischen Vorschiff 8 und Heck 9 auf dem Schiffsdeck 7 angeordnet, siehe Figur 4. Heck 9 und Vorschriff 8 sind vorzugsweise kurz, damit der Abstand vom Vorschiff 8 zum vorderen Rotorende und der Abstand vom Heck 9 zum hinteren Rotorende möglichst klein ist. Die Rotorachsen 5 verlaufen in einer Reihe. Jeder Rotor 1 ist mit seiner Welle 5 an bzw. auf einem offenen A-Masten 3 gelagert. Rotor 1 ist mit geringem Abstand zum Schiffskörper 2 angeordnet. In mindestens einem Masten 3 ist ein Aggregat 6 angeordnet. Die Rotorwelle 5 treibt direkt das Aggregat 6 an. Vorzugsweise sind drei Masten 3 installiert. An bzw. auf dem mittleren Masten 3 sind zwei Rotorwellen 5 gelagert und auf dem vorderen und hinteren Masten 3 jeweils eine Rotorwelle 5. Der Durchmesser der Rotoren 1 ist gleich oder geringer als die Breite des Schiffes.

Diese Ausführung eignet sich besonders für lange und schmale Schiffe, deren Bauhöhe und das aufrichtende Moment des Schiffskörpers begrenzt sind, wie z. B. Frachtschiffe. Für leichte Schiffe ist ein einzelner großer Rotor 1 zu schwer. Ein schwerer Rotor erzeugt ein zu großes Präzessionsmoment im Verhältnis zur Schiffsgröße bzw. Masse. Mit zwei kleineren und damit leichteren Rotoren 1 kann ebenso viel Windenergie abgenommen werden, ohne dass ein zu großes Präzessionsmoment des Rotors 1 die Stabilität des Schiffes gefährdet.

Gemäß einer weiteren Ausführungsform der Erfindung sind zwei gleich große Rotoren 1 übereinander zwischen Vorschiff 8 und Heck 9 auf dem Schiffsdeck 7 angeordnet, siehe Figur 5. Ihre Rotorachsen 5 verlaufen parallel zueinander und parallel zur Schiffslängsachse 4. Die übereinander liegenden Achsen 5 sind in geschlossenen und profilierten A-Masten 12 gelagert. Die Rotorflügel der einzelnen Rotoren 1 sind unterschiedlich profiliert, so dass sie gegenläufig drehen. Der Durchmesser des Rotors 1 ist geringer als die Breite des Schiffskörper 2. Rotor 1 ist in geringem Abstand zum Schiffsdeck 2 angeordnet. Der Abstand zwischen den Rotoren 1 ist ebenfalls gering. Jeder Rotor 1 ist mit einem Aggregat 6 verbunden und seine Welle 5 treibt direkt Aggregat 6 an. Heck 9 und Vorschiff 8 sind vorzugsweise kurz, damit der Abstand vom Vorschiff 8 zum vorderen Rotorcnde und der Abstand vom Heck 9 zum hinteren Rotorende möglichst klein ist. Bei dieser Ausführungsform, ist das aufrichtende Moment des Schiffskörpers 2 zu berücksichtigen. Der Schiffskörper 2 muss in der Lage sein, die durch den Rotorschub verursachte Krängung zu begrenzen.

Diese Ausführungsform eignet sich besonders für die Erzeugung von Antriebsenergie für Yachten sowie Sport- und Versuchsschiffe als auch für die Erzeugung von Hilfsenergie auf Schiffen mit breitem Rumpf, deren Bauhöhe nicht begrenzt ist, wie z. B. Fischereifahrzeuge sowie Tank- und Massengutfrachter.

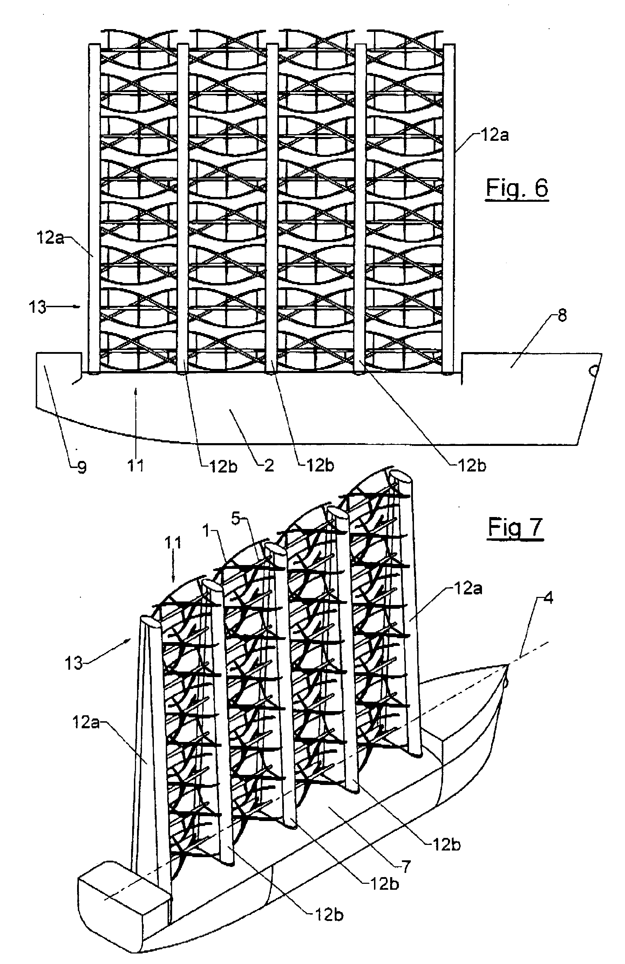

Gemäß einer weiteren Ausführungsform, siehe Figur 6 und 7, ist der Schiffskörper 2 besonders schwer auszulegen, z. B. durch die Verwendung eines schweren Deplacement-Rumpfes 2 vorzugsweise aus Stahlbeton. Diese Ausführungsform dient zum Ernten von Windenergie in Seegebieten mit großem Windaufkommen.

Auf dem Rumpf 2 sind modulartig Rotoren 1 hintereinander und übereinander zur Schiffslängsachse 4 zwischen Vorschiff 8 und Heck 9 auf dem Schiffsdeck 7 angeordnet. Die Rotorenachsen bzw. Wellen 5 sind in geschlossenen und profilierten A-Masten 12 gelagert. Vorzugsweise sind die A-Masten 12 ellilpsenförmig profiliert. Fünf Masten 12 tragen vier Rotorensäulen 11, wobei jede Säule 11 aus acht übereinander angeordneten Rotoren 1 besteht. Die Rotorenachsen 5 verlaufen parallel übereinander. Die Rotoren 5 in der Rotorsäule 11 drehen gegenläufig. Der vertikale Abstand der Rotoren 1 untereinander bzw. die Rotorenzwischenräume sind gering, aber so zu bemessen, dass eine freie Bewegung der Rotoren 1 möglich ist. Die einzelnen Rotorensäulen 11 sind nacheinander bzw. in Reihe angeordnet. Es ergeben sich acht Rotorreihen 13. Die Wellen 5 jeder Rotorreihe 13 liegen hintereinander, in einer Reihe bzw. Achse. Die Rotoren 1 der Rotorreihen 13 weisen dieselbe Drehrichtung auf. Pro Reihe 13 lagert im ersten und im letzten Mast 12 a jeweils eine Rotorachse 5. An den mittleren drei Masten 12 b lagern jeweils zwei Rotorenachsen 5.
Vorzugweise bestehen die Masten 12 aus Stahl. Jeder Rotor 1 treibt mit seiner Welle 5 mindestens ein Aggregat 6 an, welches im Mast 12 angeordnet ist. Die Höhe der Stapelung ist begrenzt durch das aufrichtende Moment des Schiffskörpers. Der Schiffskörper muss in der Lage sein, das aus dem Rotorschub resultierende krängende Moment so zu kompensieren, dass die Leistungsgrenze der Rotoren 1 nicht überschritten wird. Der Durchmesser des Rotors 1 ist deutlich geringer als die Breite des Schiffskörpers 2. Heck 9 und Vorschiff 8 sind vorzugsweise kurz, damit der Abstand vom Vorschiff 8 zum vorderen Rotorende und der Abstand vom Heck 9 zum hinteren Rotorende möglichst klein ist. Vorzugsweise sind die Masten 12 a, 12 b durch Stagen zu verstärken, und zwar ähnlich wie bei einem Segelschiff Ein verhältnismäßig kuries Vorschiff 8 und Heck 9 ermöglicht das Installieren von vielen Rotoren 1. Die Form von Heck 9 und Vorschiff 8 ist so zu wählen, dass die Rotoren 1 vor Seeschlag geschützt sind.

Im Schiffskörper 2 befinden sich die Anlagen zur weiteren Nutzung und Speicherung der aus der erzeugen Energie gewonnenen Produkte. Dies sind Elektrolysatoren, Speicher bzw. Durckspeicher und Tanks (ggf. Drucktanks bzw. Kühltanks) zur Aufnahme und Entnahme von chemischen Stoffen bzw. chemischen Verbindungen, bzw. Elementen. Soll aus der gewonnenen Rotationsenergie Methanol hergestellt werden, so ist auf dem Schiffskörpers 2 eine Anlage zur katalytischen Synthese von Methanol zu installierten mit Drucktanks bzw. Druckspeichern für H², CO² und Methanol. Das benötigte H² wird mittels Elektrolysatoren hergestellt. Diese sind über Kabel direkt mit Aggregaten 6 verbunden und erhalten so, die zur Durchführung einer Elektrolyse benötigte elektrische Energie.

Gemäß dem erfindungsgemäßen Verfahren wird die auf dem Rotorschiff erzeugte Rotationsenergie in eine andere Energieform umgewandelt, z. B. in mechanische Energie zum Antrieb von Turbinen und Motoren.

Mit dem erfindungsgemäßen Verfahren ist es weiter möglich die gewonnene Rotationsenergie in elektrische Energie umzuwandeln. Vorzugsweise dient die elektrische Energie zur Herstellung von speicherbaren chemischen Verbindungen bzw. Metallen, z. B. H² aber auch Aluminium, Kupfer oder andere Metalle.

Mit dem erfindungsgemäßen Verfahren können auch energiespeichernde chemische Verbindungen hergestellt werden, wie z. B. das Methanol. Mit Hilfe der aus der Rotationsenergie gewonnenen elektrischen Energie wird elektrolytisch H² erzeugt und unter Hinzufügung von CO² transportfähiges katalytisch synthetisiertes Methanol hergestellt. Methanol ist lagerungsfähig und transportierbar.

### Stückliste

- 1: Helix-Rotor
- 2: Schiffskörper
- 3: Offener A-Mast
- 4: Schiffslängsachse
- 5: Rotorachse oder Rotorwelle
- 6: Aggregat
- 7: Schiffsdeck
- 8: Vorschiff
- 9: Heck
- 11: Rotorsäule
- 12: Geschlossener und profilierter A-Mast
- 12 a: erster und letzter Mast
- 12 b: mittlere Masten
- 13: Ratorreihe

## Patentansprüche

1. Windkraftanlage mit wenigstens einem Helixrotor, **dadurch gekennzeichnet, dass** der oder die Helixrotoren (1) auf einem Schiff derart angeordnet sind, dass ihre Drehachse (5) parallel zur Schiffslängsachse (4) verläuft.

2. Windkraftanlage nach Anspruch 2, **dadurch gekennzeichnet, dass** jeder Helixrotor (1) mit seiner Welle (5) an auf dem Schiffskörper (2) angeordneten Masten (3, 12), gelagert ist.

3. Windkraftanlage nach einem der vorhergehenden Ansprüche, **dadurch gekennzeichnet, dass** in mindestens einem Mast (3, 12) ein Aggregat (6) zur Umwandlung von Rotationsenergie in eine andere Energieform angeordnet ist.

4. Windkraftanlage nach Anspruch 3, **dadurch gekennzeichnet, dass** in mindestens einem Mast (3, 12) ein Aggregat (6) zur Umwandlung von Rotationsenergie in elektrische Energie angeordnet ist.

5. Windkraftanlage nach einem der vorhergehenden Ansprüche, **dadurch gekennzeichnet, dass** die von den Helixrotoren (1) anzutreibenden Aggregate (6), Generatoren, Pumpen, Verdichter, Zentrifugen, Getriebe zur Weiterleitung der Rotationsenergie zum Schiffspropeller, sind.

6. Windkraftanlage nach einem der vorhergehenden Ansprüche, **dadurch gekennzeichnet, dass** der Durchmesser des Rotors (1) geringer als die Breite des Schiffsrumpfes (2) ist.

7. Windkraftanlage nach einem der vorhergehenden Ansprüche, **dadurch gekennzeichnet, dass** mindestens zwei Rotoren (1) übereinander gelagert sind und eine Rotorsäule (11) bilden, wobei die Rotoren (1) gegenläufig drehende Rotoren (1) sind.

8. Windkraftanlage nach einem der vorhergehenden Ansprüche, **dadurch gekennzeichnet, dass** mindestens zwei Rotoren (1) hintereinander gelagert sind, wobei die Rotoren (1) dieselbe Drehrichtung aufweisen.

9. Windkraftanlage nach einem der vorhergehenden Ansprüche, **dadurch gekennzeichnet, dass** die Rotoren (1) sowohl übereinander, als auch nebeneinander angeordnet sind, wobei die Rotoren (1) Rotorsäulen (11) und Rotorreihen (13) bilden.

10. Windkraftanlage nach Anspruch 8 oder 9, **dadurch gekennzeichnet, dass** die Rotoren (1) mit ihren Wellen (5) auf vor und hinter ihnen im rechten Winkel zur Schiffslängsachse (4) angeordneten ellipsenartig profilierten Masten (12) mit geringem Abstand voneinander gelagert sind, wobei in jedem Mast (12) mindestens ein Aggregat (6) zur Umwandlung von Rotationsenergie in elektrische Energie angeordnet ist, wobei im ersten und im letzten Mast (12 a) eine Rotorwelle (5) und in den mittleren Masten (12 b) zwei Rotorwellen (5) lagern.

11. Windkraftanlage nach einem der vorgehenden Ansprüche**, dadurch gekennzeichnet, dass** der Schiffsrumpf (2) ein Schwerdeplacemcnt-Rumpf aus Stahlbeton ist.

12. Windkraftanlagen nach einem der vorhergehenden Ansprüche, **dadurch gekennzeichnet, dass** auf dem Schiff Druckspeicher angeordnet sind und Elektrolysatoren, die mit Aggregaten (6) verbunden sind.

13. Verfahren zum Erzeugen von Rotationsenergie mit einer Windkraftanlage gemäß den Merkmalen von einem oder mehrerer der Ansprüche 1 bis 12.

14. Verfahren nach Anspruch 13, **dadurch gekennzeichnet, dass** die Rotationsenergie in eine andere Energiefonn umgewandelt wird.

15. Verfahren nach Anspruch 13 oder 14, **dadurch gekennzeichnet, dass** die Rotationsenergie in elektrische Energie umgewandelt wird.

16. Verfahren nach Anspruch 15, **dadurch gekennzeichnet, dass** die mit Hilfe der Rotationsenergie gewonnene elektrische Energie in speicherbare chemische Verbindungen bzw. Metalle umgewandelt wird.

17. Verfahren nach Anspruch 16, **dadurch gekennzeichnet, dass** mit Hilfe der aus Rotationsenergie gewonnenen elektrischen Energie elektrolytisch energiespcichernde chemische Verbindungen hergestellt werden.

18. Verfahren nach Anspruch 17, **dadurch gekennzeichnet, dass** mit der aus der Rotationsenergie gewonnenen elektrischen Energie elektrolytisch H² erzeugt und unter Hinzufügung von CO² transportfähiges katalytisch synthetisiertes Methanol hergestellt wird.
